(19) Europäisches Patentamt
European Patent Office
Office européen des brevets

(11) Numéro de publication : **0 459 846 A2**

(12) **DEMANDE DE BREVET EUROPEEN**

(21) Numéro de dépôt : **91401128.3**

(51) Int. Cl.$^5$ : **G01N 21/49**

(22) Date de dépôt : **29.04.91**

(30) Priorité : **27.04.90 FR 9005368**

(43) Date de publication de la demande : **04.12.91 Bulletin 91/49**

(84) Etats contractants désignés : **BE DE ES GB IT NL**

(71) Demandeur : **PONSELLE MESURE SARL**
**14, Av. de la Pépinière**
**F-78220 Viroflay (FR)**

(72) Inventeur : **Boudey, Yvan**
**26, Rue Pernety**
**F-75014 Paris (FR)**

(54) **Sonde de contrôle de turbidité de l'eau.**

(57) Sonde de turbidité submersible.
L'invention concerne une sonde optique infrarouge permettant la mesure dans l'eau elle-même de sa turbidité.

Elle est constituée d'un manche (Ma) abritant une électronique (CE) et d'une tête de sonde (Co) comportant un canal de mesure (CM) dans lequel une diode émettrice (De) émet un flux lumineux pulsé IR contrôlé par la diode (Dr.a.).

La diode photo-réceptrice (Dr) recueille le flux lumineux transmis à travers l'eau de mesure, tandis que la diode photo-réceptrice (Dn) récupère une fraction de la lumière diffusée à 90° par les matières en suspension dans l'eau (signaux Io° et I90°).

Une partie des parois du canal de mesure présente une forme spéciale : le profil géométrique symétrique (PGS) gui élimine toute lumière parasite au niveau de la diode (Dn).

Un disque absorbant (Da) et deux variantes par polariseurs et traitement de surface antireflet complètent cette suppression de lumière parasite.

La sonde selon l'invention sert au contrôle de turbidité des eaux potables et faiblement usées.

EP 0 459 846 A2

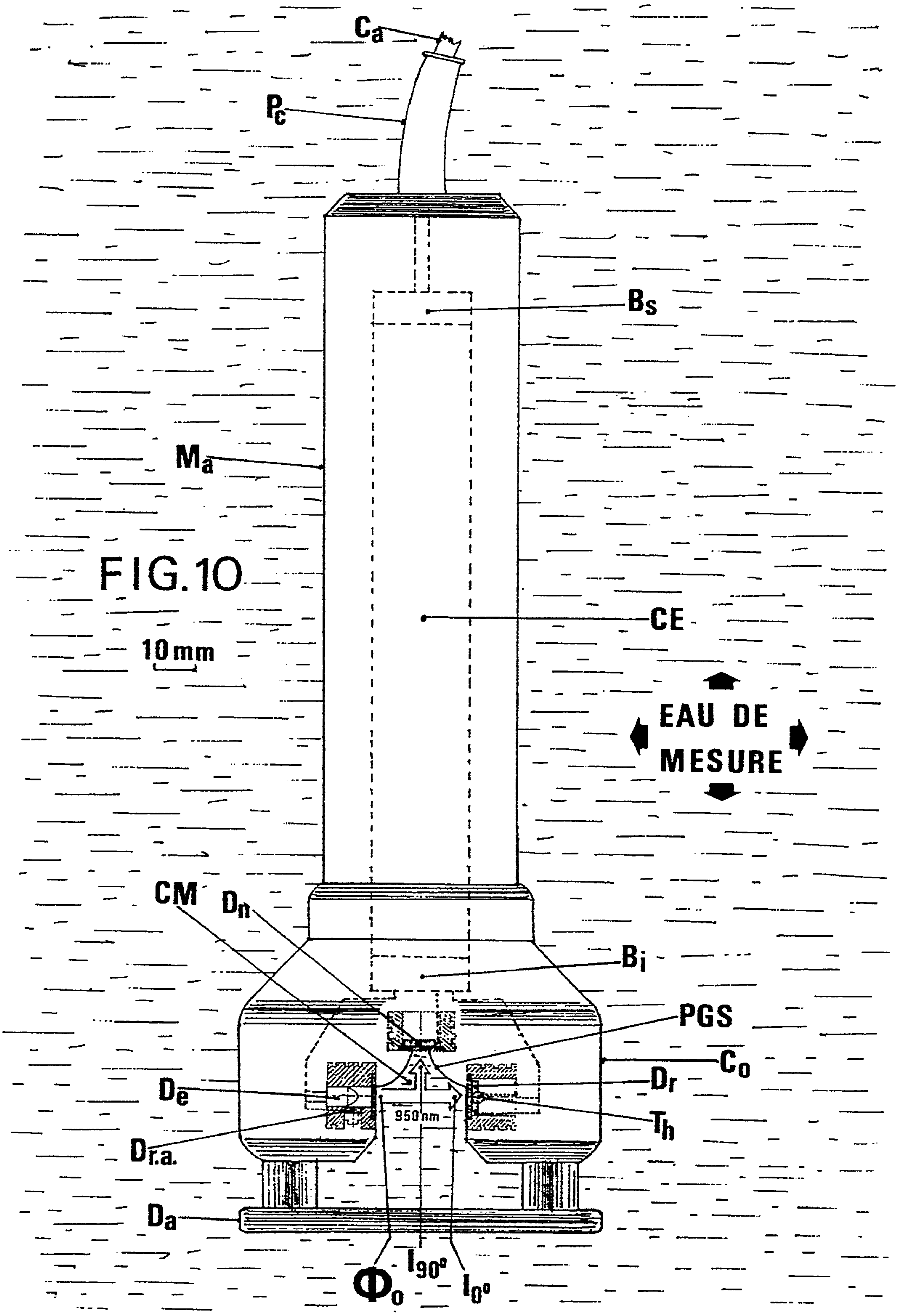
Ca
Pc
Bs
Ma
CE
10 mm
EAU DE
MESURE
CM
Dn
Bi
PGS
Co
De
Dr
Th
950 nm
Dr.a.
Da
Φo
I90°
I0°

FIG. 10

La présente invention concerne une sonde de mesure optique infrarouge submersible de précision, autonome en énergie, pour le contrôle de turbidité des eaux potables et faiblement usées.

Le domaine technique de l'invention est celui de l'optique infrarouge de mesure dans l'eau.

La mesure des très faibles turbidités s'opère avec des néphélémètres de précision qui sont des appareils à forte consommation d'énergie (non autonomes), utilisant comme source d'émission une lampe au tungstène à incandescence, des filtres, des optiques complexes.

L'eau est prélevée dans un tube (de verre en général) et la mesure optique du liquide se fait par son intermédiaire (c'est à dire à travers le tube) :

Le faisceau de lumière passe à travers l'échantillon contenu dans le tube (ou une cuvette) et l'on récupère la lumière diffusée à 90° grâce à des photo-récepteurs placés à l'extérieur du tube.

Il existe des sondes submersibles basées sur le principe néphélémétrique mais leur précision est très faible car elles sont excessivement sensibles à la lumière du jour et surtout à la lumière parasite (notion reprise dans l'exposé de l'invention).

De plus, contrairement à la sonde faisant l'objet du présent descriptif, ces capteurs n'ont pas d'électronique intégrée (dans le corps de sonde immergeable au bout du câble électrique de liaison).

Le problème technique posé trouve sa solution dans l'invention et la réalisation d'une sonde de turbidité entièrement submersible, fiable, (contrôle dans le milieu même juqu'à 30 m de profondeur) et possédant les mêmes performances (stabilité et précision de la mesure aux très faibles turbidités) que les néphélémètres avec cuves à échantillon.

La mesure de la turbidité de l'eau peut s'effectuer en utilisant l'effet TYNDALL (principe néphélémétrique).

Un liquide trouble s'éclaire vivement lorsqu'il est traversé par un faisceau lumineux, c'est le phénomène dit de Tyndall, dû aux particules insolubles en suspension diffusant latéralement une partie des rayons lumineux.

L'intensité de la lumière diffractée dépend des facteurs suivants :

$I = I_o KN \frac{v^2}{\lambda^4} \sin\beta$ (formule de Rayleigh)

I= Intensité de la "lumière Tyndall" dans une direction faisant un angle β avec le faisceau initial.

$I_o$= Intensité du rayon initial.

N= Nombre de particules causant la déviation dans le volume éclairé.

v= Volume de ces particules.

λ= Longueur d'onde de la radiation utilisée.

La norme AFNOR NFT 90-033 (septembre 1985) préconise la mesure simultanée de la lumière diffusée à β =90° et de la lumière transmise (à 0°), alors que la norme internationale ISO 7027 (1984) n'implique que l'une ou l'autre de ces deux mesures.

La sonde faisant l'objet du présent descriptif utilisera donc aussi le principe de mesure de la lumière transmise (opacimétrie) :

Les éléments en suspension dans un liquide absorbent certaines radiations. La formule théorique relative à l'absorption peut être calculée à partir de la formule de Rayleigh et

devient dans ce cas :

$$I = I_o e^{-kN_1 \frac{d^3}{\lambda^4}}$$

d= Diamètre des particules.

$N_1$= Nombre de particules dans l'unité de volume.

La mesure de la lumière diffusée est significative pour les eaux de faible turbidité non visible à l'oeil nu (par exemple les eaux de boisson).

La mesure de la lumière transmise est significative pour les eaux de turbidité visible à l'oeil nu (par exemple les eaux polluées) et pour les eaux de faible turbidité contenant les substances qui ne diffusent pas.

Pour tout échantillon d'eau, la mesure de la lumière diffusée et de la lumière transmise permet la détection de matières non dissoutes, absorbant mais diffusant mal, qui passeraient inaperçues par la seule mesure de la lumière diffusée. La même norme AFNOR NFT 90-033 prescrit l'utilisation d'une longueur d'onde supérieure à 800 nm avec $\Delta\lambda<60$ nm.

Il a donc été choisi : $\lambda_o$ = 950 nm (proche infrarouge) La source de radiation est une diode électroluminescente au GaAs et les photo-récepteurs des diodes PIN.

Une carte électronique logée dans le manche du capteur assure l'émission de la diode en régime pulsé (100 µS d'émission avec 10 Hz de fréquence de récurrence). A chaque flash le flux énergétique total est de 100 mW.

Cette même électronique assure aussi la démodulation, l'amplification et le filtrage lumière ambiante des deux signaux (à 90° et 0°) ainsi que l'asservissement optique (émission de lumière infrarouge régulée) réalisée à l'aide d'une diode photo-réceptrice PIN de rétro-action.

Enfin la carte intègre la correction finale apportée par une thermistance de type CTN pour compenser les phénomènes thermiqes qui échappent à la régulation de l'énergie lumineuse. Les signaux transmis sont normalisés :

0-1v pour la transmission.

1 mV/NTU pour la diffusion.

Il résulte de ce mode d'émission (flashs pulsés très puissants) que les mesures sont pratiquement insensibles à la lumière ambiante, même celle du soleil fortement émissif dans l'infrarouge.

De plus, les signaux peuvent être transmis à longue distance par l'intermédiaire d'un câble électrique (car démodulés et amplifiés).

Enfin le rapport cyclique d'émission choisi (1/1000) fait chuter très fortement la consommation d'énergie électrique et permet une alimentation autonome.

Il reste maintenant à expliciter la notion de "lumière parasite" qui est véritablement le fond du problème lorsqu'il s'agit de mesures néphélémétriques de précision dans les eaux très faiblement turbides.

Puis il sera développé la solution technique simple et inédite qui élimine cette lumière parasite.

– lumière parasite :

La photo-diode PIN néphélémétrique reçoit la lumière pulsée IR diffusée à 90° (+/- 10°) par les particules en suspension dans l'eau.

Dans de l'eau optiquement pure (ne contenant aucune substance à l'état particulaire ou à l'état colloïdal grâce à l'évaporation lente sous vide), cette diode recueille cependant un flux lumineux (pulsé IR) résiduel.

Or, d'après la formule de Rayleigh, le flux de lumière diffusé devrait être nul.

Ce rayonnement parasite se décompose en fait en deux parties :

1) La diffusion moléculaire.

Les molécules d'eau diffusent faiblement la lumière (coefficient total de diffusion moléculaire de l'eau: $5.10^{-4}$ $m^{-1}$ à 950 nm ).

Ce rayonnement est négligeable par rapport au suivant :

2) Les réflexions, diffusions et réfractions parasites.

Le lobe d'émission de la diode IR n'est pas parfait et une partie du rayonnement s'échappe dans l'eau (au niveau du hublot optique) sous tous les angles de 0 à ± 90° par rapport au faisceau incident principal (orthogonal au plan d'émission).

Aucun dispositif optique de collimation ne peut vraiment éliminer ce résidu de lobe car des rayons parasites sont engendrés aux diverses interfaces optiques successives (la dernière étant l'interface verre/eau), et ce par des phénomènes de réfraction, diffraction, diffusion et réflexion.

Ces rayons parasites peuvent frapper directement la photo-diode PIN de réception néphélémétrique à 90°. D'autres rayons, par un jeu successif de réflexions sur les parois du canal de mesure dans l'eau, finissent par atteindre aussi cette photo-diode (sans compter les rediffusions, diffractions sur les arêtes vives, etc).

Nota : Le canal de mesure est le volume géométrique dans lequel se fait la mesure optique de l'eau lorsque la sonde est immergée.

C'est là l'origine principale de la lumière parasite qui vient noyer le signal utile (même à des turbidités significatives) et biaiser totalement la mesure, surtout dans les très faibles turbidités, domaine de mesure de la néphélémètrie.

De plus cette lumière parasite n'est pas constante, dépendant de plusieurs paramètres fluctuants (émission lumineuse, désaxements optiques dûs aux variations de température, états de surface des parois du canal de mesure, etc).

Le matériel utilisé pour la sonde, le DELRIN noir (marque déposée), absorbe beaucoup le rayonnement IR mais insuffisammant.

Une solution technique originale consiste à éliminer le lobe d'émission parasite et ses réflexions multiples par le biais d'une forme aux surfaces spéciales (taillée dans le Delrin), l'idée de départ étant de loger la diode photo-réceptrice néphélémétrique au fond d'une "vallée" (noyée dans l'eau de mesure), d'ou elle ne pourrait recevoir que le rayonnement lumineux issu des particules diffusantes à sa verticale.

C'est cette "vallée" qui constituera alors le véritable canal de mesure de la sonde. Lorsqu'on en fait une coupe transversale, on aboutit à un profil géométrique symétrique (PGS) en forme d'entonnoir évasé. Ce profil assure à la fois un lobe d'émission quasi-parfait et une réjection optimale des rayonnements parasites :

L'émission lumineuse s'opère tangentiellement au profil qui s'incurve progressivement vers la diode photo-réceptrice néphélémétrique d'une manière fortement convexe mais très régulière ; ce mode de départ du faisceau élimine la moitié du lobe parasite (côté diode néphélémétrique) et la convexité du profil fait qu'aucun rayon émanant directement du faisceau IR émissif ne peut atteindre cette photo-diode. Le profil repart alors, exactement symétrique, de la diode néphélémétrique jusqu'à la photo-diode de réception du faisceau transmis.

Dans la majorité des cas, un rayon parasite, ne provenant pas de la diffusion des particules à 90° ± 10° (à la verticale de la photo-diode néphélémétrique), est éliminé par réflexions successives centrifuges (par rapport à la photodiode) entre les deux parois convexes du profil et ne peut donc atteindre que très difficilement cette photo-diode (d'autant plus qu'à chaque réflexion il y a absorption importante du rayon IR sur le Delrin noir).

Il n'existe pas de formule mathématique explicite pour décrire le profil définitif (l'optimum ayant été déterminé par expérimentations successives à partir d'une base simple comprenant deux arcs de cercle). Par la suite, lors de la réalisation, le profil est en réalité composé d'une série d'arcs de cercles et d'ellipses qui approximent la courbe idéale.

Le PGS n'est pas suffisant à lui seul pour se protéger entièrement de la lumière parasite.

En effet, dans la réalisation de la sonde, le canal de mesure demeure une structure ouverte :

Une partie du faisceau émissif pulsé IR peut s'en échapper directement ou indirectement (ne serait-ce que les rayons parasites réfléchis par les parois du dit canal, ceux réjectés par le PGS, ou enfin la lumière diffusée par les particules en suspension dans l'eau).

Si la sonde en submersion s'approche d'une surface réfléchissant le proche IR (exemple : verre dans le cas d'un étalonnage en récipient ; sable ou cailloux en eau libre), tous ces résidus d'émission IR pulsée risquent d'être réfléchis et renvoyés directement sur la photo-diode néphélémétrique (faisant face au fond réfléchissant).

L'idée de départ, pour résoudre ce problème technique, est d'intercepter le flux lumineux IR pulsé parasite (et son retour éventuel) par une surface absorbante de matière et de forme appropriées, qui laisserait le canal de mesure relativement libre (structure encore ouverte pour faciliter la circulation ou le simple renouvellement de l'eau dans le dit canal).

Après diverses expérimentations, il a été choisi pour la réalisation effective de cette surface absorbante un disque en Delrin noir d'une certaine épaisseur.

Ce disque absorbant (Da) est alors positionné en tête de sonde, face au côté ouvert du canal de mesure, parallèlement à son fond (qui contient la photo-diode néphélémétrique) et à une certaine distance de la dite photo-diode.

La recherche de la distance optimale est essentielle et n'a pu être déterminée qu'expérimentalement :

– trop courte, la surface intérieure du disque (côté canal de mesure) risque de reverbérer les rayons parasites (qu'elle ne peut entièrement absorber) sur la photo-diode néphélémétrique.

– trop longue, les rayons parasites peuvent de nouveau s'échapper en eau libre (structure très ouverte) et revenir par réflexions.

. En plus, de même que le PGS, le Da rend la sonde encore plus insensible à la lumière du jour (même très violente) et protège les hublots optiques de tout choc accidentel.

Le point essentiel, en mesure néphélémétrique des eaux claires est la lumière parasite de toute nature (réflexions successives, etc).

Deux variantes technologiques complémentaires seront donc utilisées pour éliminer cette lumière parasite :

1 - Polarisation de la lumière

A l'aide de polariseurs on peut éteindre les réflexions successives de la lumière IR pulsée dans l'eau, sur les parois du canal de mesure, tout en laissant passer la lumière diffusée par les matières en suspension (signal utile).

En effet, la lumière diffusée est la somme de celle diffusée par les molécules (de l'eau), à laquelle correspond un taux de polarisation égal à 84% environ (taux maximal dans l'eau pure pour un angle de diffusion entre 90° et 105°), et de celle diffusée par les particules en suspension, pour laquelle le taux de polarisation est en général plus faible (d'autant plus faible qu'il y a plus de grosses particules et que leur indice est plus grand).

Par un jeu de polariseurs appropriés incorporé aux optiques on peut donc séparer les 2 flux de lumière diffusée et réfléchie en éteignant le flux parasite polarisé par les multiples réflexions dans l'eau sur les parois.

2 - Surfaces non réfléchisssantes (couche antireflet).

Les surfaces en jeu (optiquement) sont en verre et Delrin (résine acétal noire).

Les réflexions multiples parasites sont déjà minimisées par des interfaces Eau/Delrin fortement absorbantes pour la longueur d'onde choisie (950 nm).

Cependant la longueur d'onde $\lambda_o$= 950 nm appartient au proche Infrarouge et obéit aux lois de l'optique géométrique (comme le spectre visible) d'où les réflexions successives parasites incomplètement absorbées.

L'émission étant quasiment monochromatique, on peut annuler le facteur de réflexion des surfaces en jeu pour cette longueur d'onde d'émission (traitement de surface par dépôt de couches minces d'indice de réfraction et d'épaisseur $\lambda/4n$ appropriés).

Les dessins annexés illustrent l'invention :

– La figure 1 représente le manche de la sonde Ma.
– La figure 2 représente le disque absorbant Da et ses deux pieds de support Ps.
– La figure 3 représente en coupe la coquille Co.
– La figure 4 représente la vue de dessous de la coquille Co.
– La figure 5 représente la coquille Co de face.
– La figure 6 représente la vue de côté de la coquille Co.
– La figure 7 représente la chambre optique Ce ( en coupe, et vue de face partiellement coupée).
– La figure 8 représente la chambre optique Cr (en coupe et vue de face).
– La figure 9 représente la chambre optique Cn (en coupe et vue de face).
– La figure 10 représente la sonde de mesure de turbidité dans son ensemble en fonctionnement, entièrement immergée dans l'eau de mesure, avec ses éléments essentiels et leurs liaisons organiques.

Structurellement, la sonde optique infrarouge est constituée de deux parties principales :

1 - Un manche creux cylindrique (Ma) en Delrin (marque déposée) noir dont la partie épaulée (Ep) est dotée d'un pas de vis (Pv).

Ce manche est destiné à loger l'électronique, le rôle de celle-ci ayant été explicité précédemment.

La carte électronique, de dimensions L = 155, l = 21 possède à son extrémité inférieure un bornier (Bi) pour l'arrivée des fils électriques provenant des diodes et de la thermistance, et à son extrémité supérieure un bornier (Bs) pour l'arrivée des fils d'alimentation et le départ des deux fils signal (néphélémétrique et transmission).

Nota : Le départ du câble (Ca) (au sommet du manche) est protégé par un passe câble (Pc) en caoutchouc, l'extrémité du câble de liaison étant connectée sur une prise étanche (corps en PBT).

2 - Une coquille en Delrin noir (Co) sur laquelle s'emboîte puis se visse le manche (Ma). Entièrement assemblée avec ses éléments constitutifs (décris ci-après), cette coquille constitue la tête de mesure de la sonde optique.

2 - 1 La coquille possède à sa partie supérieure un évidement central cylindrique (Ev), doté d'un pas de vis (P'v), pour la fixation du manche.

2 - 2 La coquille est percée latéralement de deux cavites (A) et (B) cylindriques ø16 ayant le même axe et débouchant symétriquement de part et d'autre du canal de mesure (CM).

– Dans (A) vient s'emmancher une chambre optique Ce permettant de contenir et positionnner la diode IR d'émission (De) par rapport à l'axe d'émission optique EE' et la diode de rétro-action PIN (Dr.a.) par rapport à la diode d'émission.

Descriptif particulier :

La chambre optique Ce est constituée d'un réceptacle cylindrique creux en Delrin noir, (Cec), scellé hermétiquement d'un côté par un hublot optique en verre (He), la diode d'émission IR (De) lui faisant face, légèrement en retrait dans son logement cylindrique.

La diode PIN de rétro-action (Dr.a.) est maintenue dans une petite alvéole située au dessus de la diode d'émission (en fonctionnement, cette diode récupère une fraction du flux infrarouge pulsé émis par la LED par l'intermédiaire d'une lumière calibrée (Lu)).

La surface cylindrique extérieure de la chambre optique est rainurée, de manière à assurer un collage efficace à l'intérieur de la cavité (A) :

La chambre optique complète est emmanchée et scellée dans son logement (A), sa face plane avec le hublot venant en butée contre le méplat supérieur (Wa).

– Dans (B) vient s'engager une chambre optique Cr permettant de contenir et positionner la diode PIN de réception (Dr) par rapport à l'axe d'émission EE' et de loger la thermistance CTN de compensation thermique (Th).

Descriptif particulier :

La chambre optique Cr est aussi constituée d'un réceptacle cylindrique creux en Delrin noir (Crc), scellé hermétiquement d'un côté par un hublot optique en verre (Hr), la diode de réception PIN (Dr) étant mise en place et collée contre le hublot optique ( à l'intérieur du réceptacle), à plat, élément photo-sensible dirigé vers le verre.

La thermistance CTN (Th) est aussi collée sur sa tranche contre le hublot optique, dans l'espace laissé libre par la diode PIN.

La surface cylindrique extérieure de la chambre optique est aussi rainurée, de manière à assurer un collage efficace à l'intérieur de la cavité (B) :

La chambre optique complète est emmanchée et scellée dans son logement (B), sa face plane avec le hublot venant en butée contre le méplat supérieur (Wb).

2 - 2 La coquille possède enfin une cavité (C) cylindrique débouchant dans l'évidement central (Ev) et dont l'axe de symétrie FF' est orthogonal à l'axe EE' d'émission.

Dans (C) vient s'engager une chambre optique Cn permettant de positionner la diode PIN (Dn) de réception néphélémétrique (diffusion à 90°) par rapport à l'axe FF' des radiations diffusées.

Descriptif particulier :

C'est encore un réceptacle cylindrique creux (Cnc) en Delrin noir, légèrement plus court que la Cr, scellé hermétiquement d'un côté par un hublot optique en verre (Hn), la diode PIN 90° (Dn) étant mise en place et collée contre le hublot optique (à l'intérieur du réceptacle), à plat, élément photo-sensible dirigé vers le verre.

La surface cylindrique extérieure de la chambre optique est rainurée de manière à assurer un bon collage à l'intérieur de la cavité (C).

La chambre optique complète est positionnée et scellée dans son logement (C), sa face plane avec le hublot venant en butée contre les deux méplats horizontaux (Z) et (Z'), (orientation telle que le flux IR pulsé reçu à 90° par diffusion des particules soit maximal).

2 - 3 Deux couloirs cylindriques (a) et (b), d'oblicité 30° par rapport a la verticale FF', partent respectivement du sommet de chaque cavité (A) et (B) et débouchent à l'aplomb de l'embase du manche.

Ces deux accès servent à l'arrivée et à la reprise des fils électriques isolés d'alimentation et signal des diodes d'émission, de rétroaction, de réception-transmission, et la thermistance CTN (ces fils, qui débordent dans l'évidement central (Ev), à l'aplomb de la base du manche, seront connectés au bornier inférieur de la plaquette électronique, avec les fils de reprise de la diode 90° (Dn) qui arrivent directement).

2 - 4 La partie inférieure de la coquille comporte le canal de mesure (CM), structure creuse ouverte qui délimite le volume de mesure, et dans lequel débouchent les trois hublots optiques.

Le canal de mesure développe, pour toute coupe transversale XX, une forme constante symétrique (plan de symétrie PP) dont une portion présente un profil géométrique spécial : c'est le PGS, au rôle fondamental précédemment explicité.

2 - 5 A la base inférieure de la coquille sont percés deux trous filetés (t) et (t') ø 2,4 en vue d'y insérer deux vis BTR M3 inox.

Celles-ci ont pour rôle de fixer deux colonnes (Ps) en Delrin noir (ø 12 L 10) qui servent de pieds de support pour le disque absorbant Da en Delrin noir (ø 80 e = 5).

Ce disque est percé de deux trous filetés (q) et (q') ø3 et peut donc se visser et se dévisser aisément sur les pieds de support par l'intermédiaire de deux vis (ø3 L8) inox.

La finalité de ce disque absorbant Da a été définie auparavant.

2 - 6 Nota :

A part une partie de la chambre optique Ce (petit volume compris entre le hublot et la diode d'émission), toutes les cavités internes des éléments constitutifs de la sonde sont comblées en coulant des résines spécifiques qui assurent la fixation des éléments ainsi que l'étancheité, la tenue thermique, mécanique et chimique aux agents extérieurs (milieux aqueux de mesure).

En fonctionnement, la sonde néphélémétrique est entièrement immergée dans l'eau de mesure :

La diode d'émission (De) émet son faiseau IR pulsé (øo). La diode de réception (Dr) reçoit la partie de ce flux transmise à 0° (à travers l'eau de mesure). Cette intensité lumineuse (Io°) est convertie en signal électrique par la diode et ce signal est démodulé, filtré et amplifié par la carte électronique (CE) (il servira de référence).

Une partie du flux de lumière diffusée (IR pulsée) par l'ensemble des particules en suspension dans l'eau dans un faible volume $v_o$, sous un angle de 90°, parvient à la diode néphélémétrique (Dn) (seul parvient le flux utile grâce au profil géométrique symétrique et au disque absorbant).

Cette intensité lumineuse (I90°) est convertie en signal électrique par la diode et ce signal est démodulé, filtré et amplifié par la carte électronique (CE).

C'est le signal utile, dont sera extrait la valeur de la turbidité de l'eau.

Remarque : Les angles de mesure et d'ouverture sont conformes aux normes AFNOR NFT 90-033 (1985) et ISO 7027 (1984).

Le flux lumineux pulsé IR(øo) émis est constant (asservissement optique réglé par la diode de rétroaction (Dr.a.) et la carte éléctronique (CE), ce qui assure la stabilité des deux signaux de mesure.

Enfin, la thermistance (Th) corrige les variations de flux reçu imputables aux effets thermiques.

Nota :

Il est utile de préciser que les deux signaux transmis par la sonde (par l'intermédiaire du câble de liaison,en immersion lui aussi) sont traités en aval par un boîtier électronique.

Ce boîtier (autonome en énergie) assure l'alimentation électrique de la sonde, l'affichage, l'étalonnage, la linéarisation, et la transmission éventuelle du signal de turbidité.

Le signal de turbidité est obtenu par le traitement approprié des signaux de mesure I90° et Io°.

. Si l'on veut être conforme à la norme AFNOR NFT 90-033 (1985), il faut prendre en compte simultanément ces deux signaux, ou bien par exemple (mesure en continu de la turbidité), procéder par ratiométrie de type $\frac{I90° + q}{Io° + b}$

. En ne prenant en compte que l'une ou l'autre de ces deux mesures, on reste cependant en conformité avec la norme internationale ISO 7027 (1984). (A condition de prendre un couple émetteur/récepteur centré sur $\lambda$ =880 nm, ce qui constitue une variante technologique mineure de la présente sonde, ne changeant rien à ses particularités techniques).

Unités :

La turbidité s'exprime en unités FAU lorsqu'elle est mesurée par la transmission à O° et en unités FNU si elle est mesurée par la diffusion à 90°.

Dans le cas général (par exemple la mesure ratiométrique), l'unité est le NTU.

En fait, ces trois unités sont dans la pratique équivalentes, car l'évaluation de la turbidité se fait par comparaison de la lumière diffusée et de la lumière transmise par l'échantillon d'eau et par une gamme étalon constituée de solutions de formazine (à partir d'une solution mère de 4000 NTU par définition).

La sonde néphélémétrique s'étalonnera donc dans ces solutions de formazine (tête de sonde immergée).

Tant par son autonomie énergétique et sa submersibilité intégrale que par sa précision et sa stabilité comparables à un analyseur optique de laboratoire sur échantillon, la sonde optique infrarouge faisant l'objet du présent descriptif peut servir à la mesure ponctuelle ou en continu de la turbidité des eaux potables et faiblement usées (ou turbides) sur tous les sites :

- Eaux de source
- Eaux en voie de traitement (usines d'eau potable)
- Lacs, canaux et rivières
- Eaux de mer
- Rejets de stations d'épuration
- Process industriels (exemple : agro-alimentaire).

La liste n'est pas exhaustive. On peut ajouter que la mise en poste de la sonde de turbidité est très simple :

Soit à plonger directement dans l'eau de mesure, libre ou en bout de perche.

Soit insérée dans une chambre de mesure à circulation. Enfin,un dispositif de nettoyage automatique peut être adjoint à la sonde pour la mesure en continu des eaux encrassantes.

## Revendications

**1)** Sonde de mesure optique infrarouge submersible de précision , autonome en énergie, pour le contrôle de turbidité des eaux potables et faiblement usées caractérisée en ce que le manche de la sonde (Ma) abrite une carte électronique (CE) de pilotage, la tête de sonde (Co) possède une géométrie spéciale (PGS) ainsi qu'un disque (Da) en vue d'éliminer toute lumière parasite, et qu'il est prévu au moins deux moyens supplémentairesde suppression par l'utilisation de polariseurs ou par un traitement anti-reflet.

**2)** Dispositif selon la revendication 1 caractérisé en ce que la carte électronique (CE) logée dans le manche (Ma) assure l'intégralité du pilotage des éléments opto-électroniques de la tête de mesure (Co) et le traitement complet des signaux transmission et néphélémétrie (Io° et I90°).

**3)** Dispositif selon la revendication 1 caractérisé en ce que le canal de mesure (CM) de la tête de sonde (Co) possède un profil géométrique symétrique (PGS), qui a pour rôle essentiel de protéger la diode photo-réceptrice néphélémétrique (Dn) de toute lumière parasite infrarouge (provenant indirectement du flux émissif pulsé), tout en laissant parvenir à cette même diode le flux utile de lumière diffusée à 90° par les matières en suspension (signal néphélémétrique).

**4)** Dispositif suivant la revendication 1 caractérisé en ce que la tête de sonde (Co) est dotée d'un disque absorbant (Da) qui clôt optiquement le canal de mesure (CM), et dont le but est de compléter la fonction anti-"lumière parasite" du profil géométrique symétrique (PGS), en interceptant par absorption le flux parasite IR pulsé de fuite et son éventuel renvoi partiel, par des surfaces extérieures, directement sur la diode photo-réceptrice néphélémétrique (Dn).

**5)** Dispositif selon la revendication 1 caractérisé par un jeu de polariseurs incorporés aux optiques permettant de supprimer la lumière parasite fortement polarisée.

**6)** Dispositif selon la renvendication 1 caractérisé en ce les parois du canal de mesure (CM) et les surfaces optiques en jeu dans l'émission et la réception font l'objet d'un traitement de surface anti-reflet, par dépôt de couches minces appropriées, afin d'annuler la lumière parasite.

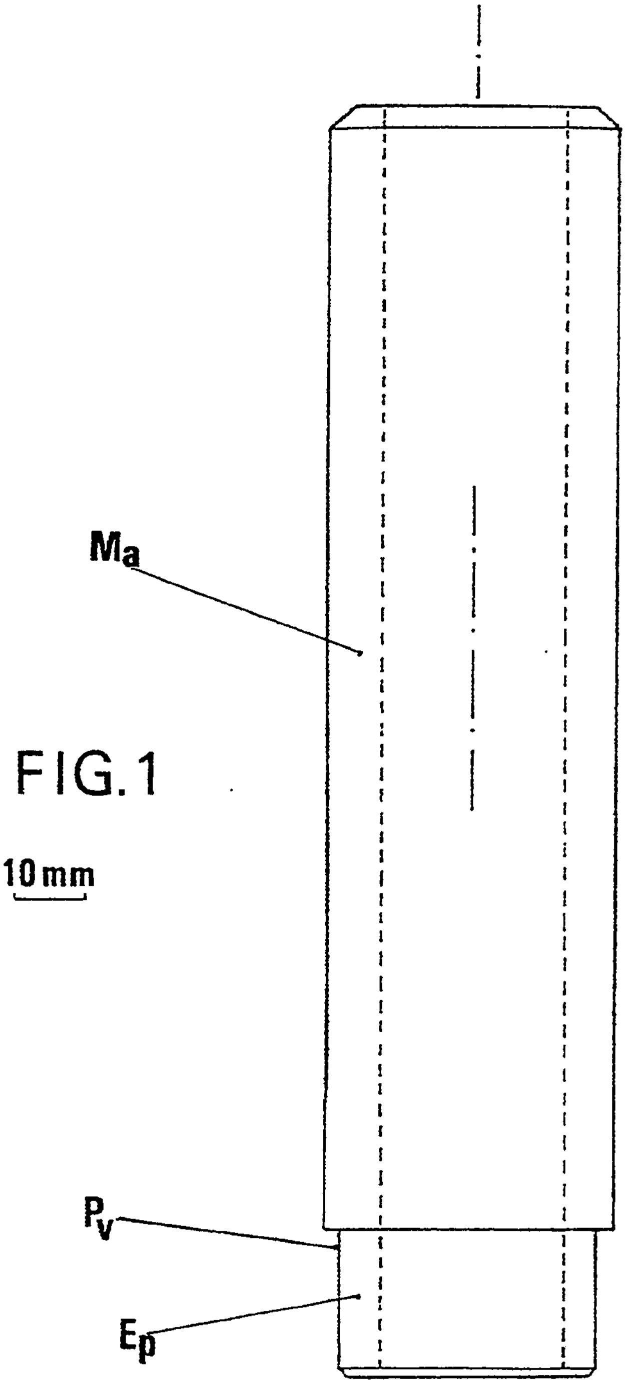


FIG.1

10 mm

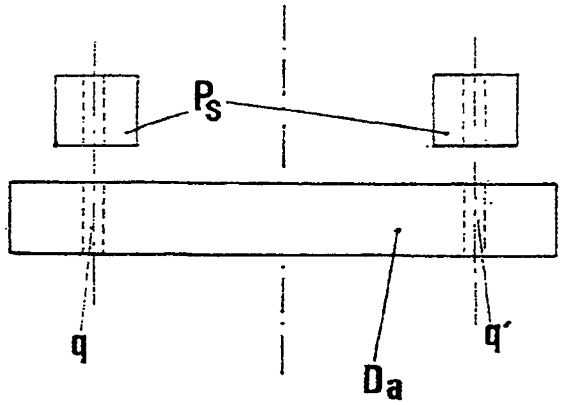


FIG. 2

10 mm

Coupe suivant PP

FIG.3

10 mm

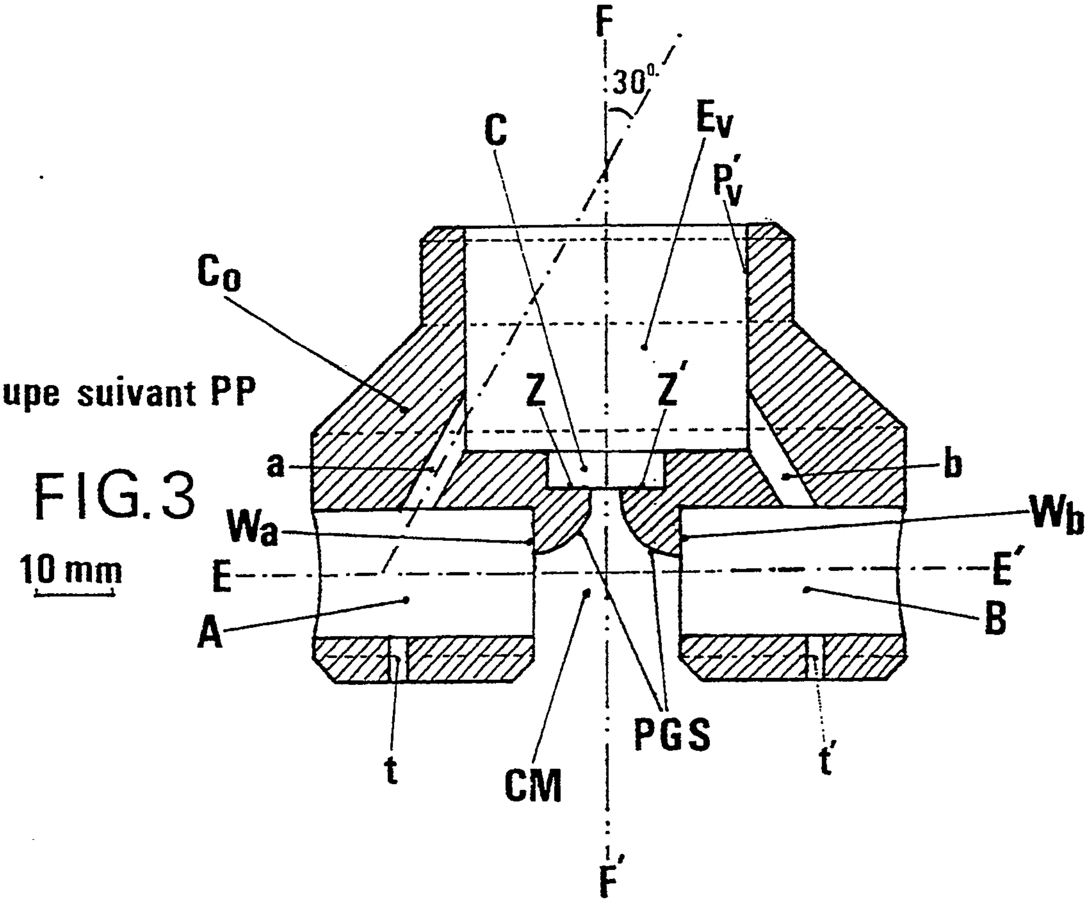


FIG.4

10 mm

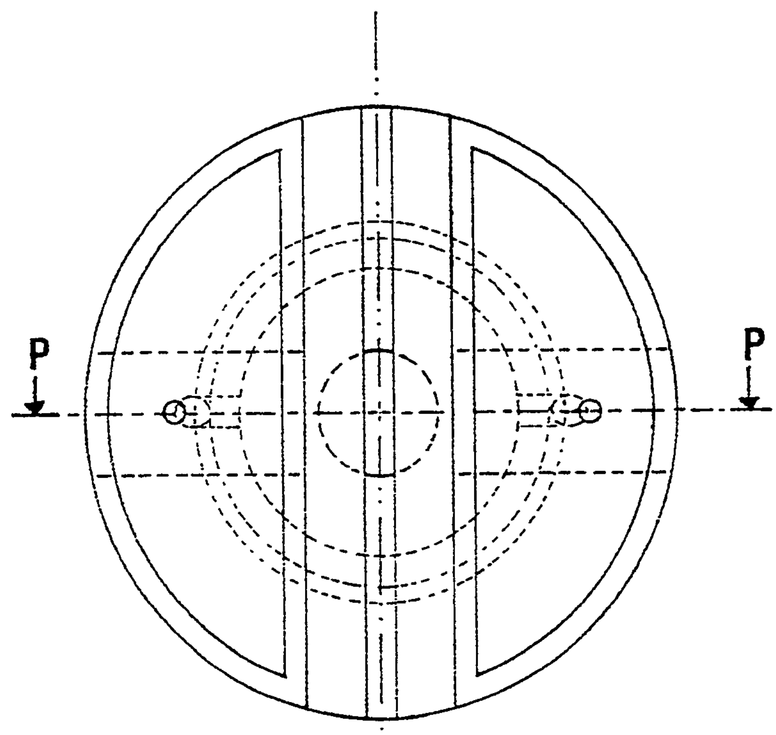

FIG.5

10 mm

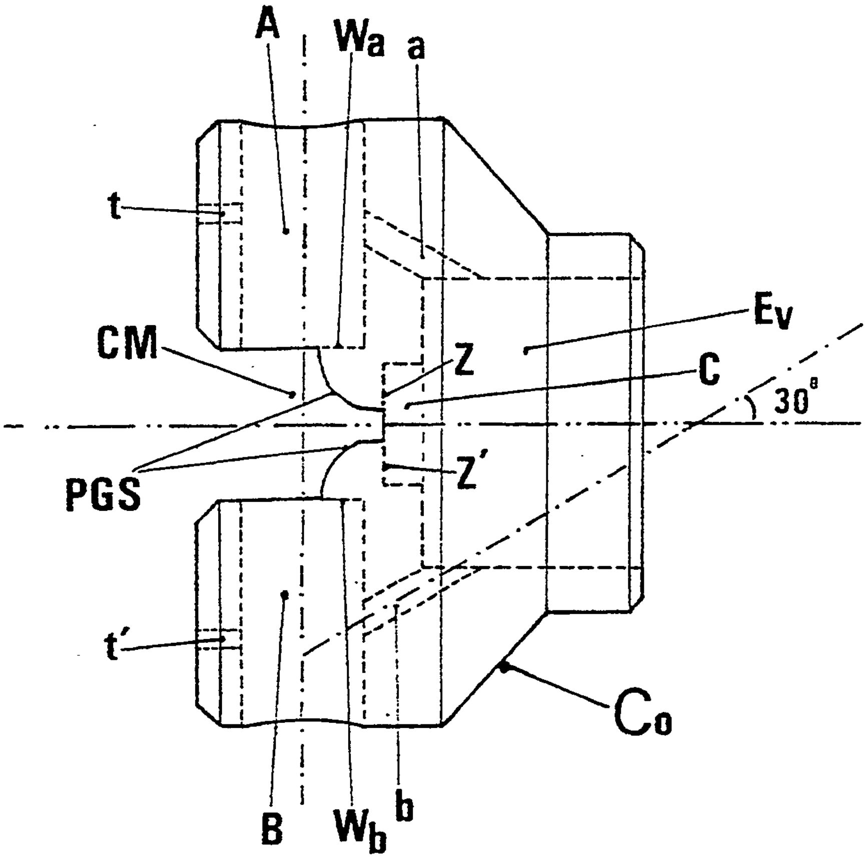


FIG.6

10 mm

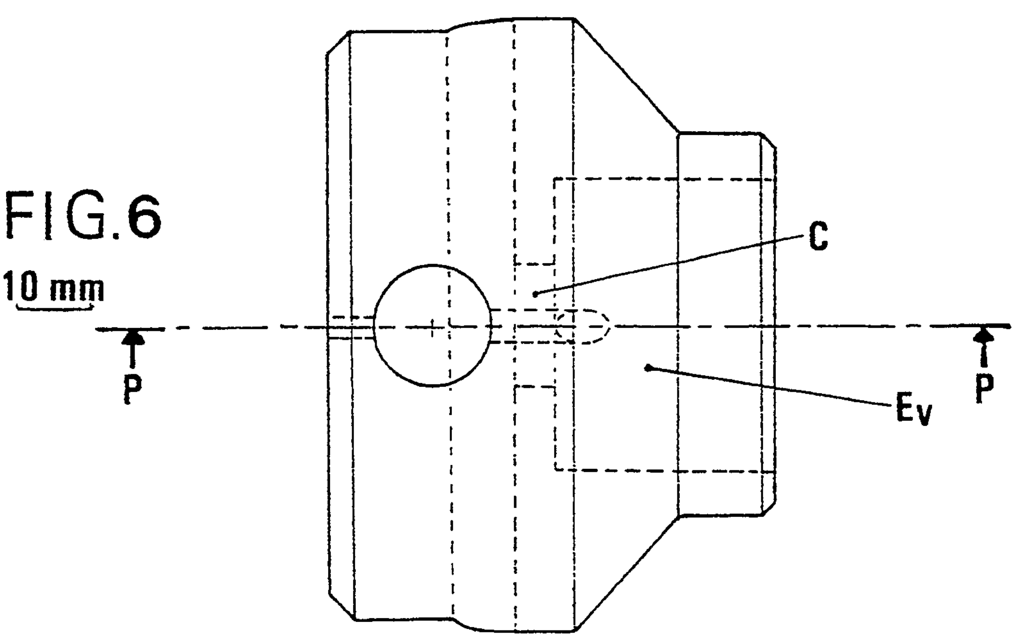

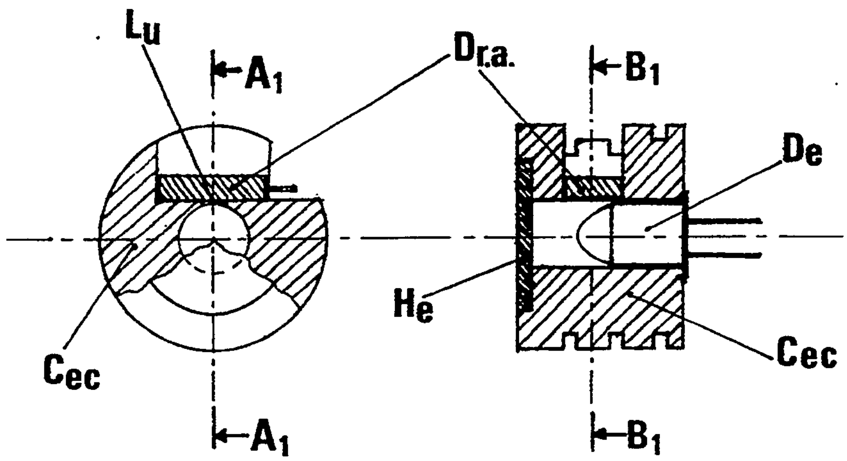


FIG.7

10 mm

Coupe partielle suivant $B_1B_1$ Coupe suivant $A_1A_1$

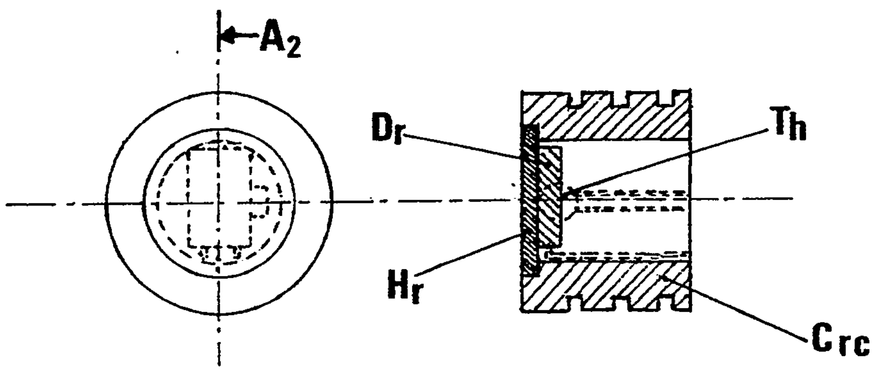


FIG.8

10 mm

Coupe suivant $A_2A_2$

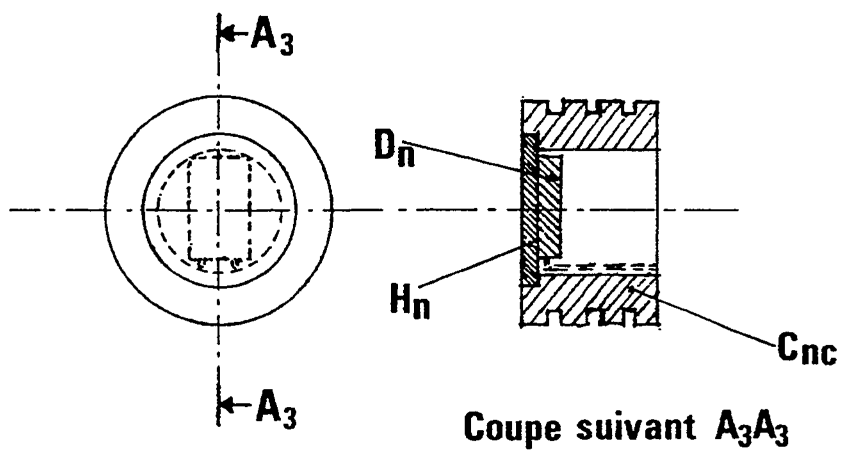


FIG.9

10 mm

Coupe suivant $A_3A_3$

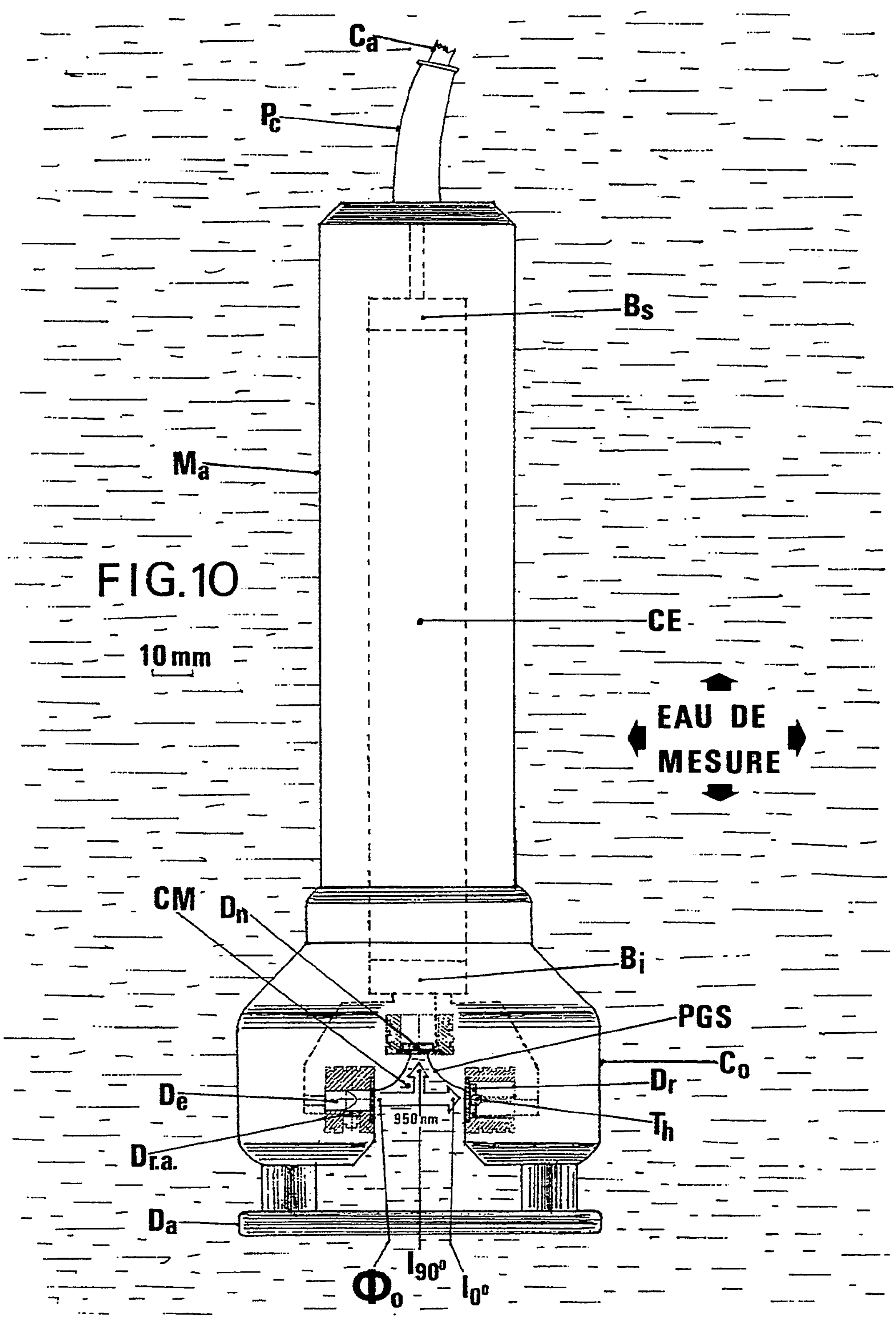

Ca
Pc
Bs
Ma
FIG.10
10 mm
CE
EAU DE
MESURE
CM
Dn
Bi
PGS
Co
Dr
De
950 nm
Th
Dr.a.
Da
Φo
I90°
I0°